**Europäisches Patentamt**

**European Patent Office**

**Office européen des brevets**

(11) Veröffentlichungsnummer: **0 159 409**
**A2**

# EUROPÄISCHE PATENTANMELDUNG

(21) Anmeldenummer: **84116031.0**

(22) Anmeldetag: **21.12.84**

(51) Int. Cl.⁴: **G 06 K 11/06**

(30) Priorität: **22.03.84 DE 3410524**

(43) Veröffentlichungstag der Anmeldung: **30.10.85**
**Patentblatt 85/44**

(84) Benannte Vertragsstaaten: **DE FR GB IT NL**

(71) Anmelder: **VDO Adolf Schindling AG, Gräfstrasse 103, D-6000 Frankfurt/Main (DE)**

(72) Erfinder: **Kister, Horst, Am Hebestumpf 58, D-6393 Wehrheim/Taunus (DE)**

(74) Vertreter: **Klein, Thomas, Dipl.-Ing. (FH), Sodener Strasse 9 Postfach 6140, D-6231 Schwalbach a. Ts. (DE)**

(54) **Druckschalterplatte mit verschiedenen Betätigungsbereichen.**

(57) Die Erfindung betrifft einen Druckschalter mit einer Druckplatte (4), deren Betätigungsfläche (7) eine Mehrzahl von Betätigungsbereichen aufweist.

Jedem Betätigungsbereich ist eine Schalteinheit zugeordnet, die jeweils bei Druckbeaufschlagung des zugeordneten Betätigungsbereichs ansteuerbar ist.

Durch Lastmeßfühler (5) ist die Druckbeaufschlagungsverteilung an der Druckplatte (4) erfaßbar, von einer Auswerteinheit aufgrund der Druckbeaufschlagungsverteilung der druckbeaufschlagte Betätigungsbereich ermittelbar und die diesem Betätigungsbereich zugeordnete Schalteinheit ansteuerbar.

/

VDO Adolf Schindling AG

Gräfstraße 103
6000 Frankfurt/Main

G-R Kl-kmo  / 852

21. Februar 1984

Druckschalter

Die Erfindung bezieht sich auf einen Druckschalter mit einer Druckplatte, deren Betätigungsfläche eine Mehrzahl von Betätigungsbereichen aufweist, wobei jedem Betätigungsbereich eine Schalteinheit zugeordnet ist, die jeweils bei Druckbeaufschlagung des zugeordneten Betätigungsbereichs ansteuerbar ist.

Bei einem derartigen Druckschalter ist es bekannt, die Druckplatte aus mehreren übereinanderliegenden flexiblen Schichten mit Kontaktflächen auszubilden, wobei jeweils zwei sich auf den flexiblen Schichten gegenüberliegend angeordnete Kontaktflächen einen Betätigungsbereich bilden. Durch Druckbeaufschlagung eines Betätigungsbereichs kommen dessen Kontaktflächen aufeinander zur Auflage, wodurch die entsprechende Schalteinheit ansteuerbar ist. Dazu ist es erforderlich, daß zu allen Kontaktflächen Leiterbahnen geführt werden. Darüber hinaus ist der mehrschichtige Aufbau der Druckplatte bauteil- und platzaufwendig, sowie durch die erforderliche exakte Zuordnung der Kontaktflächen zueinander nur mit erhebli-

./.

- 2 -

2

çhem Aufwand herstellbar.

Aufgabe der Erfindung ist daher, einen Druckschalter
nach dem Oberbegriff zu schaffen, der einen einfachen
leicht montierbaren Aufbau besitzt.

Diese Aufgabe wird erfindungsgemäß dadurch gelöst, daß
durch Lastmeßfühler die Druckbeaufschlagungsverteilung
an der Druckplatte erfaßbar, von einer Auswerteeinheit
aufgrund der Druckbeaufschlagungsverteilung der druckbeaufschlagte Betätigungsbereich ermittelbar und die
diesem Betätigungsbereich zugeordnete Schalteinheit ansteuerbar ist. Für die Druckplatte kann nun eine ganz
normale Platte verwendet werden, deren Druckbeaufschlagungsverteilung mit einfachen elektrischen bzw. elektronischen Mitteln auswertbar ist. Die Anzahl der zu
bewegenden Bauteile ist äußerst gering, so daß auch die
Störanfälligkeit erheblich reduziert wird.

Um möglichst gute Unterschiede in der Druckbeaufschlagungsverteilung zu erhalten, können die Lastmeßfühler
am Randbereich der Druckplatte verteilt angeordnet sein.
Vorzugsweise sind mindestens drei Lastmeßfühler etwa
gleichmäßig verteilt angeordnet. Sind mehr als drei Lastmeßfühler verwendet, kann man sogar eine Redundanz in
der Erfassung der Druckbeaufschlagungsverteilung erhalten, so daß selbst bei Ausfall eines Lastmeßfühlers die
Funktion des Druckschalters nicht beeinträchtigt ist.

Die Lastmeßfühler können Dehnungsmeßstreifen, Piezoelemente oder auch druckabhängige Widerstandselemente sein.

./.

J

Eine besonders vorteilhafte Ausbildung der Widerstandselemente besteht dabei in der Verwendung von Widerstandsgummis.

Da abgesehen vom Randbereich die Druckplatte völlig frei ist, kann sie gleichzeitig als Sichtfeld ausgebildet sein. Dadurch ist eine separate Anordnung eines Sichtfeldes nicht erforderlich, so daß sich eine erhebliche Raumersparnis ergibt.

Das Sichtfeld kann vollständig bzw. teilweise auf verschiedene Bilddarstellungen umschaltbar sein, wodurch eine Vielfachanzeige möglich ist. Es ist aber auch möglich unterschiedliche Gesamtfunktionen des ganzen Druckschalters ansteuerbar zu schalten.

Eine Bilddarstellung kann die Betätigungsbereichsbezeichnung sein.

Eine andere Bilddarstellung kann die Darstellung veränderlicher alphanumerischer Zeichen sein.

Eine geringe Baugröße kann erreicht werden, wenn das Sichtfeld eine optoelektronische Anzeige mit z.B. einer Kathodenstrahlröhre, Leuchtdioden oder einer Flüssigkristallanzeige aufweist.

Bei der Verwendung einer transparenten Druckplatte kann die Anzeige unter der transparenten Druckplatte angeordnet sein. Ein noch geringerer Platzbedarf und Teileaufwand ist erforderlich, wenn die Druckplatte als Anzeige ausgebildet ist.

./.

0159409

4

Ausführungsbeispiele der Erfindung sind in der Zeichnung dargestellt und werden im folgenden näher beschrieben. Es zeigen

Figur 1    eine Draufsicht auf ein Gerät mit einem Druckschalter

Figur 2    einen Querschnitt durch das Gerät nach Figur 1 im Bereich des Druckschalters mit unter der Druckplatte angeordneter Anzeige

Figur 3    einen Querschnitt durch ein Gerät nach Figur 1 im Bereich des Druckschalters mit als Anzeige ausgebildeter Druckplatte

Das in der Zeichnung dargestellte Gerät besitzt ein Gehäuse 1, das an seiner nach oben zeigenden Fläche als Druckschalter ausgebildet ist.
Dieser Druckschalter ist in einer nach oben offenen, rechteckigen Ausnehmung 3 des Gehäuses 1 derart angeordnet, daß der obere Gehäuserand und die obere Druckschalterfläche bündig sind.

Der Druckschalter 2 besitzt eine Druckplatte 4 bzw. 4', die über als Piezoelement  ausgebildete Lastmeßfühler 5 direkt oder indirekt am Boden 6 der Ausnehmung 3 abgestützt ist. Jeweils ein Lastmeßfühler 5 ist in einer Ecke der rechteckigen Druckplatte 4 bzw. 4' angeordnet.

Die Lastmeßfühler 5 sind über nicht dargestellte Verbindungsleitungen mit einer ebenfalls nicht dargestellten Auswerteeinheit verbunden.

./.

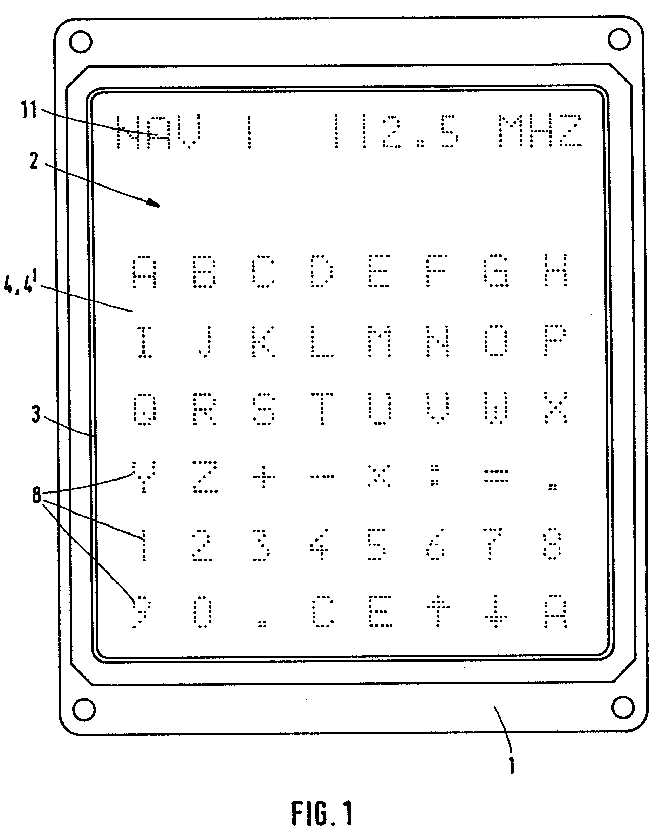

Bei Druckbeaufschlagung an irgendeiner Stelle der Betätigungsfläche 7 der Druckplatte 4 bzw. 4' wird von jedem Lastmeßfühler 5 die an seiner Stelle entstehende Aufstützbelastung erfaßt und ein entsprechendes Signal der Auswerteeinheit zugeleitet. Diese ermittelt aufgrund dieser Signale die Druckbeaufschlagungsverteilung und damit den Betätigungsbereich der Druckplatte 4 bzw. 4', der druckbeaufschlagt wurde. Jeder Betätigungsbereich der Druckplatte 4 bzw. 4' der in Figur 1 durch eines der Zeichen 8 bezeichnet ist, ist einer bestimmten nicht dargestellten Schalteinheit zugeordnet, die bei Druckbeaufschlagung des ihr zugewandten Betätigungsbereichs durch die Auswerteeinheit angesteuert wird.

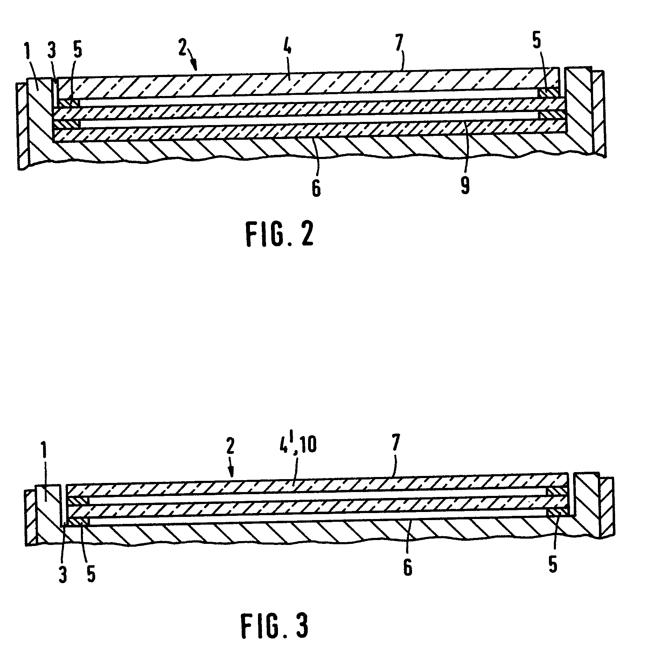

In Figur 2 ist unter der transparenten Druckplatte 4 eine Flüssigkristallzelle 9 angeordnet, so daß die Betätigungsfläche 7 der Druckplatte 4 gleichzeitig als Sichtfeld ausgebildet ist.

Ein noch geringeres Bauvolumen wird bei der Ausführung in Figur 3 erreicht, bei der eine Druckplatte 4' selbst als Flüssigkristallzelle 10 ausgebildet ist und auch hier die Betätigungsfläche 7 gleichzeitig als Sichtfeld ausgebildet ist.

Außer den die Betätigungsbereiche bezeichnenden Zeichen 8 werden durch die Flüssigkristallzellen 9 bzw. 10 auch die alphanumerischen Zeichen einer Datenüberwachung 11 dargestellt.

Anstelle der Zeichen 8 und der Datenüberwachung 11 kann die Anzeige des Sichtfeldes auch umgeschaltet werden, um andere Bilddarstellungen, als die in den Figuren gezeigten, anzuzeigen.

0159409

VDO Adolf Schindling AG

Gräfstraße 103
6000 Frankfurt/Main

G-R Kl-kmo  / 852
21. Februar 1984

Patentansprüche

1. Druckschalter mit einer Druckplatte, deren Betätigungsfläche eine Mehrzahl von Betätigungsbereichen aufweist, wobei jedem Betätigungsbereich eine Schalteinheit zugeordnet ist, die jeweils bei Druckbeaufschlagung des zugeordneten Betätigungsbereichs ansteuerbar ist, dadurch gekennzeichnet, daß durch Lastmeßfühler (5) die Druckbeaufschlagungsverteilung an der Druckplatte (4 bzw. 4') erfaßbar, von einer Auswerteeinheit aufgrund der Druckbeaufschlagungsverteilung der druckbeaufschlagte Betätigungsbereich ermittelbar und die diesem Betätigungsbereich zugeordnete Schalteinheit ansteuerbar ist.

2. Druckschalter nach Anspruch 1, dadurch gekennzeichnet, daß die Lastmeßfühler (5) am Randbereich der Druckplatte (4 bzw. 4') verteilt angeordnet sind.

3. Druckschalter nach einem der vorhergehenden Ansprüche, dadurch gekennzeichnet, daß mindestens drei Lastmeßfühler (5) etwa gleichmäßig verteilt angeordnet sind.

./.

- 2 -

4. Druckschalter nach einem der vorhergehenden Ansprüche, dadurch gekennzeichnet, daß die Lastmeßfühler Dehnungsmeßstreifen sind.

5. Druckschalter nach einem der Ansprüche 1 bis 3, dadurch gekennzeichnet, daß die Lastmeßfühler (5) Piezoelemente sind.

6. Druckschalter nach einem der Ansprüche 1 bis 3, dadurch gekennzeichnet, daß die Lastmeßfühler druckabhängige Widerstandselemente sind.

7. Druckschalter nach Anspruch 6, dadurch gekennzeichnet, daß die Widerstandselemente Widerstandsgummis sind.

8. Druckschalter nach einem der vorhergehenden Ansprüche, dadurch gekennzeichnet, daß die Druckplatte (4 bzw. 4') als Sichtfeld ausgebildet ist.

9. Druckschalter nach Anspruch 8, dadurch gekennzeichnet, daß das Sichtfeld vollständig bzw. teilweise auf verschiedene Bilddarstellungen umschaltbar ist.

10. Druckschalter nach Anspruch 9, dadurch gekennzeichnet, daß eine Bilddarstellung die Betätigungsbereichsbezeichnung ist.

11. Druckschalter nach Anspruch 8, dadurch gekennzeichnet, daß eine Bilddarstellung die Darstellung veränderlicher alphanumerischer Zeichen ist.

12. Druckschalter nach Anspruch 8, dadurch gekennzeichnet, daß das Sichtfeld eine optoelektronische Anzeige aufweist.

./.

13. Druckschalter nach Anspruch 12, <u>dadurch gekenn-</u><u>zeichnet</u>, daß die Anzeige unter der transparenten Druckplatte (4) angeordnet ist.

14. Druckschalter nach Anspruch 12, <u>dadurch gekenn-</u><u>zeichnet</u>, daß die Druckplatte (14') als Anzeige ausgebildet ist.

0159409

FIG.1

0159409

FIG. 2

FIG. 3